# EUROPÄISCHE PATENTSCHRIFT

(11) **EP 2 372 825 B1**
(45) Veröffentlichungstag und Bekanntmachung des Hinweises auf die Patenterteilung: **27.04.2016**
(21) Anmeldenummer: 11159976.7
(22) Anmeldetag: 28.03.2011
(51) Int. Cl.: H01M 8/02, H01M 8/24, H01M 8/12

(54) **Brennstoffzellenmodul**
Fuel cell module
Module de pile à combustible

(30) Priorität: 01.04.2010 DE 102010003643
(43) Veröffentlichungstag der Anmeldung: 05.10.2011
(73) Patentinhaber: Forschungszentrum Jülich GmbH, 52425 Jülich (DE)
(72) Erfinder: Peksen, Murat, Dr., 52070 Aachen (DE)
(74) Vertreter: Jostarndt, Hans-Dieter

(56) Entgegenhaltungen:
- WO-A1-2005/091408
- WO-A1-2007/093148
- US-A1- 2003 186 106
- US-A1- 2005 271 909
- US-A1- 2005 271 926
- US-A1- 2006 204 807
- US-B1- 6 531 238

## Beschreibung

Die Erfindung betrifft ein Brennstoffzellenmodul.

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, werden in der Regel viele Brennstoffzellen zu einer größeren Brennstoffzelleneinrichtung (Brennstoffzellenstapel) zusammengeschaltet.

Die Brennstoffzelle besteht jeweils aus einem Elektrolyten, wie z. B. einer Ionenaustauschermembran, je einer Gasdiffusionsschicht für Anode und Kathode sowie Gasverteilungskanälen, die an der Anode bzw. Kathode vorgesehen sind.

Insbesondere betrifft die Erfindung Hochtemperaturbrennstoffzellen, vorzugsweise SOFCs, Solid Oxide Fuel Cells (SOFC).

Die in der Brennstoffzelle erfolgenden elektrochemischen Reaktionen sowie der erzeugte elektrische Strom produzieren Wärme. Die Wärme sollte gleichmäßig entstehen und/oder verteilt werden (thermische Leitung) und schnellstens über das Kühlmittel (für die SOFC ist das die Luft) abgeführt werden. Die Luft nimmt die Wärme über Konvektion oder Strahlung auf. Für die bei hohen Temperaturen betriebenen SOFC's ist die Temperaturverteilung von besonderer Bedeutung. Eine ungleichmäßige Temperaturverteilung führt zu thermischen Spannungen. Thermischen Spannungen können zu Zerstörung von Werkstoffen der Brennstoffzellen führen. Dadurch entstehen Schäden, die vermieden werden müssen. Dies gilt insbesondere für gegebenenfalls eingesetzte keramische Werkstoffe.

Eine bekannte Maßnahme zur Effizienzsteigerung von Brennstoffzellen ist die Herabsetzung ihrer Betriebstemperatur durch Verwendung dünner Elektrolytschichten. Durch Verwendung der Anode als Substrat wird die mechanische Stabilität der Zellen vom Elektrolyten auf die Anode übertragen. Dies ermöglicht eine Verringerung der Elektrodendicke von ~ 150 µm auf ~ 5 µm und führt zu einer Widerstandsabnahme um mehr als eine Größenordnung über den Elektrolyten. Bei Verwendung von Elektroden mit optimiertem Mikrogefüge kann die Betriebstemperatur dieser Zellen unter 800 °C (1472 °F) abgesenkt werden. Elektrochemische Versuche zeigen, dass bei diesen Temperaturen eine Mindestanforderung von 0,2 W/cm² bei einer Betriebsspannung von 0,7 V leicht einzuhalten ist.

Aus dem Stand der Technik sind Brennstoffzellenmodule bekannt, bei denen bipolare Platten in einen Interkonnektor eingegliedert und übereinander gestapelt sind, wobei sich durch Stapelaussparungen in einem Brennstoffzellenraum Gasversorgungs- und Gasentsorgungsräume bilden und wobei die bipolaren Platten Gasverteilerstrukturen enthalten, über die eine Anode mit Brenngas und eine Kathode mit Luft versorgt werden kann.

Die US-Anmeldung Nr. 2005/02171926 offenbart hierzu ein entsprechendes Brennstoffzellenmodul, dass weiterhin dadurch gekennzeichnet ist, dass bei einer Breite d einer der bipolaren Platten ein Steg zwischen einer Lufteintrittsöffnung und einer Brenngasaustrittsöffnung eine lediglich figürlich dargestellte Breite (A1) bezogen auf d aufweist, dass eine halbe Breite (D1) wenigstens einer Brenngasaustrittsöffnung einen lediglich figürlich dargestellten Anteil von d beträgt, dass die Brenngasaustrittsöffnung eine lediglich figürlich dargestellte Höhe bezogen auf d aufweist, und dass die Lufteintrittsöffnung, die Luftaustrittsöffnung, die Brenngaseintrittsöffnung und die Brenngasaustrittsöffnung wenigstens abschnittsweise bogenförmig ausgebildet sind. Beachtlicherweise offenbart diese

US-Anmeldung aber kein Hochtemperaturbrennstoffzellenmodul.

Aufgabe der Erfindung ist, eine Hochtemperaturbrennstoffzelle bereitzustellen, die mit einem möglichst hohen Wirkungsgrad betrieben werden kann und bei der thermische Spannungen soweit reduziert werden, dass keine Schäden entstehen.

Erfindungsgemäß wird diese Aufgabe durch ein Hochtemperaturbrennstoffzellenmodul nach Anspruch 1 gelöst. Vorteilhafte Weiterbildungen des Hochtemperaturbrennstoffzellenmoduls ergeben sich aus den Unteransprüchen.

Die Erfindung sieht ein Brennstoffzellenmodul vor, bei dem bipolare Platten in einen Interkonnektor eingegliedert und übereinander gestapelt sind, wobei sich durch Stapelaussparungen in einem Brennstoffzellenraum Gasversorgungs- und Gasentsorgungsräume bilden und wobei die bipolaren Platten Gasverteilerstrukturen enthalten, über die eine Anode mit Brenngas und eine Kathode mit Luft versorgt werden kann.

Erfindungsgemäß ist dieses Brennstoffzellenmodul so ausgestaltet, dass bei einer Breite d einer der bipolaren Platten ein Steg zwischen einer Lufteintrittsöffnung und einer Brenngasaustrittsöffnung eine Breite von wenigstens 5% von d aufweist, dass eine halbe Breite einer Brenngasaustrittsöffnung wenigstens 10% von d beträgt, dass eine Höhe der Brenngasaustrittsöffnung wenigstens 7% von d beträgt, und dass die Lufteintrittsöffnung, die Brenngaseintrittsöffnung und die Brenngasaustrittsöffnung wenigstens abschnittsweise bogenförmig ausgebildet sind.

Eine Weiterbildung der Erfindung sieht vor, dass bei wenigstens einer der Öffnungen - Lufteintrittsöffnung, Luftaustrittsöffnung, Brenngaseintrittsöffnung oder Brenngasaustrittsöffnung -die bogenförmige Ausbildung durch ein Rechteck mit abgerundeten Kanten realisiert wird.

Eine Weiterbildung der Erfindung sieht vor, dass bei wenigstens einer der Öffnungen - Lufteintrittsöffnung, Luftaustrittsöffnung, Brenngaseintrittsöffnung oder Brenngasaustrittsöffnung, dass die bogenförmige Ausbildung durch eine Ellipse realisiert wird,

Eine Weiterbildung der Erfindung sieht vor, dass bei wenigstens einer der Öffnungen - Lufteintrittsöffriung, Luftaustrittsöffnung, Brenngaseintrittsöffnung oder Brenngasaustrittsöffnung, dass die bogenförmige Ausbildung durch einen Kreis realisiert wird.

Eine Weiterbildung des Brennstoffzellenmoduls zeichnet sich dadurch aus, dass der Steg zwischen der Lufteintrittsöffnung und der Brenngasaustrittsöffnung eine Breite von wenigstens 20% von d aufweist.

Eine weitere Ausgestaltung des Brennstoffzellenmoduls sieht vor, dass eine Länge eines internen Manifolds wenigstens 10% von d beträgt.

Eine Weiterbildung des Brennstoffzellenmoduls zeichnet sich dadurch aus, dass eine Länge eines internen Manifolds wenigstens 12% von d beträgt.

Eine Weiterentwicklung des Brennstoffzellehmoduls zeichnet sich dadurch aus, dass ein Abstand B1 zwischen dem Manifold und einem Strömungsverteiler wenigstens 6% von d beträgt.

Eine Weiterentwicklung des Brennstoffzellenmoduls sieht vor, dass eine halbe Breite der Brenngasaustrittsöffnung wenigstens 12% von d beträgt,

Eine Weiterbildung des Brennstoffzellenmoduls sieht vor, dass ein Abstand C1_1 zwischen einer Brenngasaustrittsöffnung und einer Außenkante der bipolaren Platte wenigstens 6% von d beträgt.

Erfindungsgemäße Brennstoffzellen zeichnen sich durch eine erhebliche Verringerung von thermischen Spannungen verbunden mit einer wesentlichen Erhöhung der Lebensdauer aus.

Vergleichsuntersuchungen zwischen der erfindungsgemäßen Brennstoffzelle und Brerinstoffzellen nach dem Stand der Technik ergaben, dass sich bereits durch in dem Hauptanspruch enthaltenen Merkmale die thermischen Spannungen soweit reduzieren, dass sich die Lebensdauer der Brennstoffzelle mehr als verdoppelt.

Durch die Maßnahmen der einzelnen Unteransprüche lässt sich die Lebensdauer der Brennstoffzelle noch weiter erhöhen.

Bei den Untersuchungen hat sich beispielsweise gezeigt, dass bereits durch jede einzelne der Maßnahmen der Unteransprüche eine erhebliche Verlängerung der Lebensdauer erzielt werden kann.

Eine überraschenderweise auftretende noch erheblich größere Verlängerung der Lebensdauer der Brennstoffzelle lässt sich dadurch erreichen, dass die Merkmale mehrerer Unteransprüche miteinander kombiniert werden.

Weitere Vorteile, Besonderheiten und zweckmäßige Weiterbildungen der Erfindung ergeben sich aus den Unteransprüche und der nachfolgenden Darstellung bevorzugter Ausführungsbeispiele anhand der Abbildungen.

Von den Abbildungen zeigt:
Fig. 1 einen Ausschnitt einer erfindungsgemäßen bipolaren Platte;
Fig.2a eine räumliche Darstellung der erfindungsgemäßen bipolaren Platte;
Fig.2b eine Aufsicht auf die erfindungsgemäßen bipolaren Platte und
Fig. 2c einen Ausschnitt der in Fig. 1, Fig. 2a und Fig. 2b dargestellten bipolaren Platte.

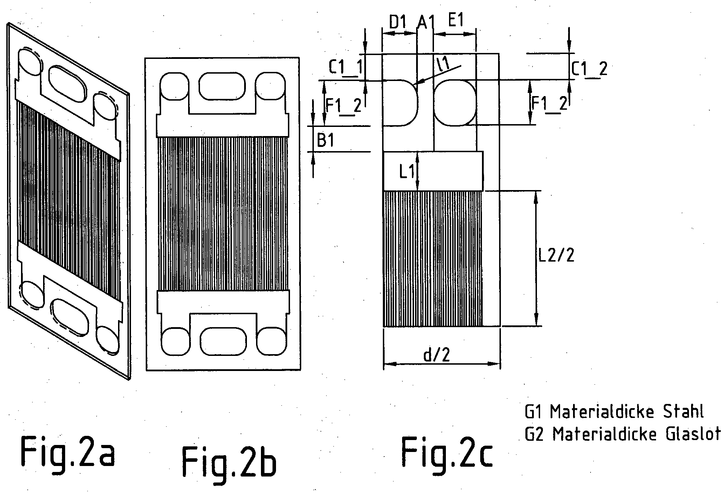

Zur besseren Erläuterung der Größenverhältnisse der erfindungsgemäßen bipolaren Platte ist in Fig. 2c ein Teil der bipolaren Platte wiedergegeben. Es handelt sich hierbei im Wesentlichen um den in Bezug zu der Fig. 2b rechts oben liegenden Quadranten der bipolaren Platte.

Die bipolare Platte weist vorzugsweise eine hohe Symmetrie auf, so dass der linke obere Quadrant der bipolaren Platte aus dem in Fig. 2c dargestellten Quadranten durch Spiegelung entlang der linken Begrenzungskante des in Fig. 2c dargestellten Quadranten gebildet wird.

Der Quadrant rechts unten wird durch Spiegelung an der Unterkante des in Fig. 2c dargestellten Quadranten an seinem unteren Rand gebildet.

Der linke untere Quadrant der bipolaren Platte wird durch Punktspiegelung mit Bezug zu dem Schnittpunkt des linken Randes und des unteren Randes des in Fig. 2c dargestellten Quadranten gebildet.

Nachfolgend wird die Erfindung am Beispiel von Hochtemperaturbrennstoffzellen (SOFCs) erläutert. Vorzugsweise handelt es sich hierbei um Hochtemperaturbrennstoffzellen mit einem planaren Stackdesign, vorzugsweise mit großflächigen, ebenen Anodensubstratzellen mit breitem d in der Größenordnung 100-250 Millimeter und einem vorzugsweise metallischen Interkonnektor.

Die Erfindung ist nicht auf die dargestellten Größenangaben beschränkt, da die Erfindung die überraschende Erkenntnis ausnutzt, dass anstelle von absoluten Größen für einzelne Bestandteile der Platten, Größenverhältnisse eine Rolle spielen, die insbesondere im Bezug auf die Breite d und für die Erzielung der Lebensdauerverlängerung von besonderer Bedeutung sind.

Die Erfindung ist in keiner Weise auf absolute Größenangaben beschränkt, denn die angegebenen Größen stellen lediglich bevorzugte Ausführungsformen zur Realisierung der Erfindung dar und gehören damit zu Weiterbildungen der Erfindung.

Ein wichtiger Bestandteil von Hochtemperaturbrennstoffzellen-Stacks sind bipolare Platten, die auch als Interkonnektoren bezeichnet werden. Die Fertigung der bipolaren Platten erfolgt derzeit durch Wasserstrahlschneiden und Fräsen. Um eine beschleunigte Herstellung der Brennstoffzellen zu erreichen, wird als alternative Herstellungsroute für Interkonnektoren die größtenteils automatisierbare Prägetechnik eingesetzt. Als Ausgangsstoffe zum Prägen dienen Stahlbleche z.B. aus JS3 mit Dicken zwischen 0,3 bis 1 mm. Eine mit einer Einführung von Prägetechnik verbundene Reduzierung der Interkonnektordicke hat den Vorteil, dass sich die Bauhöhe und das Gewicht des Stacks reduzieren, was vor allem für mobile Anwendungen bedeutsam ist. Auf der anderen Seite beeinflusst die Interkonnektordicke die Wärmeverteilung im Stack. Durch die verringerte Wärmeleitfähigkeit dünner Interkonnektorplatten kann es zu einer Erhöhung der auf die Zelle wirkenden Temperaturgradienten kommen. Die Aufgaben der bipolaren Platten sind die elektrische Kontaktierung der Brennstoffzellen sowie die Zuführung der Brenngase.

Eine wichtige Anforderung bei der Kontaktierung ist der möglichst geringe Übergangswiderstand zu den Elektroden der SOFC. Um die Kontaktierung zu verbessern und eine gleichmäßige Gasströmungsverteilung zu erreichen, wird auf der Anodenseite ein Ni-Netz zwischen Anodensubstrat und bipolarer Platte eingebracht. Auf der Kathodenseite wird der Kontakt durch eine keramische Kontaktschicht verbessert.

Zur Führung der Brenngase sind in den bipolaren Platten Gasverteilerstrukturen enthalten, über die die Anode mit Brenngas und die Kathode mit Luft versorgt wird. Wichtig hierbei ist die zuverlässige Trennung der beiden Gasräume durch ein wirksames Dichtungskonzept. Als Werkstoffe für die bipolaren Platten können hochlegierte ferritische Stähle eingesetzt werden, wenn die Betriebstemperatur der SOFC nicht oberhalb von 800°C liegt. Diese Voraussetzung wird beim anodengestützten Substratkonzept erfüllt. Der Einsatz von Stahl als Interkonnektorwerkstoff bietet den Vorteil, dass seine Herstellung zur Massenfertigung geeignet ist und so eine Kostenminimierung gegenüber keramischen Interkonnektorwerkstoffen möglich ist.

Um die langzeitstabile Kontaktierung der Zellen im Stack weiter zu verbessern, wurde von der Anmelderin der vorliegenden Anmeldung ein neuer Stahl entwickelt, der von ihr unter der Bezeichnung Jülicher Stahl JS3 angeboten wird. Dieser Stahl bildet bei SOFC-Betriebstemperatur auf der Oberfläche eine zweiphasige Schicht aus, die aus einem Cr-Mn-Spinell auf einer Cr₂O₃-Zwischenschicht besteht und für die Hochtemperaturkorrosionsbeständigkeit des Stahls verantwortlich ist. Eine wichtige Aufgabe der äußeren Cr-Mn-Spinell-Schicht ist auch die Reduzierung der Cr-Abdampfung, die zu einer Verschlechterung der Leistungsfähigkeit der Kathode führt.

Derartige Hochtemperaturbrennstoffzellen können in weiten Temperaturbereichen betrieben werden. Bevorzugte Temperaturbereiche liegen in der Größenordnung von 600°C bis 1000°C, wobei Prozesse, die einen Einsatz von Wasserstoff vorsehen, einen bevorzugten Temperaturbereich von 700°C bis maximal 900°C aufweisen.

Die vorliegende Erfindung kann jedoch auch in anderen Temperaturbereichen durchgeführt werden. Dies gilt insbesondere dann, wenn andere Brennmaterialien, beispielsweise Methan, Biodiesel oder Kerosin eingesetzt werden.

Aus energetischen Gründen ist eine besonders niedrige Temperatur bevorzugt, wobei die erfindungsgemäße geometrische Ausgestaltung in sehr großen Temperaturbereichen eingesetzt werden kann und somit eine hohe Flexibilität der Brennstoffzelle für eine Vielzahl von Anwendungen ermöglicht.

Die Weiterbildungen der Erfindung können auf unterschiedliche Weise realisiert werden. So ist es beispielsweise auch ohne einen Einsatz der hier dargestellten besonders vorteilhaften Materialien möglich, durch die dargestellte geometrische Gestaltung der Brennstoffzelle ihre Lebensdauer erheblich zu erhöhen.

Durch eine Kombination der eingesetzten geometrischen Parameter mit den dargestellten Materialien lässt sich jedoch eine noch stärkere Verlängerung der Lebensdauer der Brennstoffzellen erreichen.

Eine Abdichtung der Brennstoffzelle erfolgt beispielsweise mit Glaskeramik.

Eine derart abgedichtete Brennstoffzelle weist eine hohe Lebensdauer mit Betriebszeiten in der Größenordnung von zigtausend Stunden auf. Besonders hervorzuheben ist, dass während dieser gesamten Lebensdauer eine uneingeschränkte thermische Zyklierfähigkeit gewährleistet wird.

Ferner eignen sich derartige Brennstoffzellen für große Leistungsabgaben, vorzugsweise in der Größe einiger kW.

Eine Weiterbildung der Erfindung sieht eine besondere Ausgestaltung eines internen Manifolds, beziehungsweise eine Anpassung des Manifolds an die Stackgeometrie vor.

Beim internen Manifold werden im Falle des Anodensubstrates zunächst die Brennstoffzellen in einen rahmenartigen Interkonnektor eingegliedert und abgedichtet. Dies stellt das Grundelement für den SOFC Stapel dar. Durch Stapelung der Grundelemente entsteht der Gesamtstapel. Bei dieser Stapelung bilden sich durch entsprechende Aussparungen im Brennstoffzellenrahmen die Gasver- und Entsorgungsräume. Das elektrische Potential liegt an den Interkonnektoren an, die wiederum elektrisch voneinander isoliert sein müssen. Bei dieser Konstruktion wird die Abdichtungsproblematik vermindert, da lediglich gleichartige Flachdichtungen erforderlich sind. Bei diesem Konstruktionsprinzip kann die Abdichtung ebenfalls aus einer elektrisch isolierenden Glaskeramik bestehen; im Weiteren ist jedoch auch eine Abdichtung mit in der Technik üblichen Hochtemperatur-Flachdichtungen denkbar

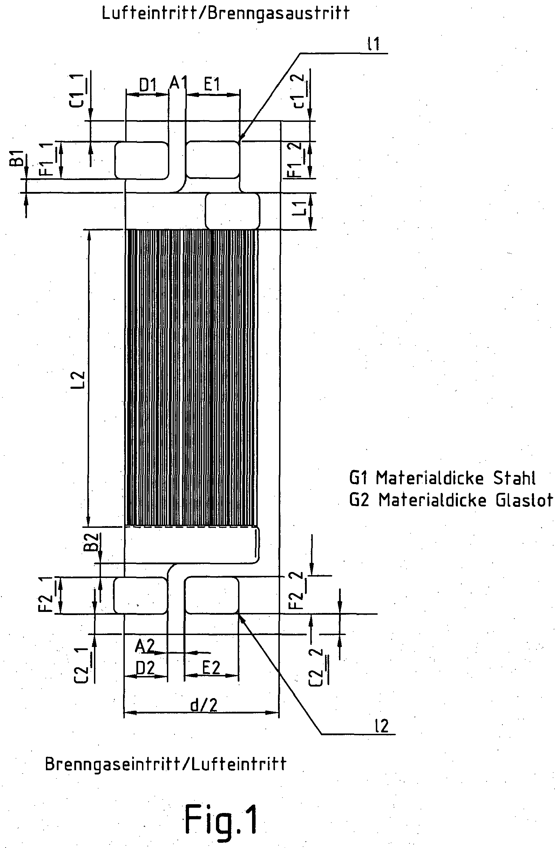

Die in Fig. 1 und Fig. 2 dargestellten bipolaren Platten werden übereinander zu Stacks gestapelt, wobei stoffschlüssige Verbindungen zwischen den metallischen Teilen der SOFC (Gehäuse, Deckel, Interkonnektoren, Endkonnektoren) vorteilhaft sind.

Diese stoffschlüssigen Verbindungen sollen gasdicht sein; weiterhin kommt dem Aspekt der elektrischen Isolation zentrale Bedeutung zu - weswegen Glaspulver in Pastentechnologie ein wichtiger Vorbereitungsschritt für den Bau von Hochtemperaturbrennstoffzellen bildet (SOFC).

Der eigentliche Zusammenbau der Brennstoffzelle unter Stapelung der bipolaren Platten zu Stacks beinhaltet das Stapeln von Endkonnektoren, Interkonnektoren und Zellen im Gehäuse, wobei die elektrische Isolation durch die zuvor aufgebrachten Glasschichten erzeugt wird.

Die Pastentechnologie ermöglicht einen wichtigen Vorbereitungsschritt für den Stackbau (Assemblierung von Hochtemperaturbrennstoffzellen, SOFC).

Das BCS-Glas (BaO-CaO-SiO₂) wird in einer Kugelmühle gemahlen. Das fertige Glaspulver wird mit Terpineol und Ethylcellulose zu einer Paste verarbeitet. Die Homogenisierung der Paste erfolgt mit einem Ultraschalldispergator.

Gefüllt in Spritzen, kann diese Paste unter einem definierten Druck mit einem Fügeroboter linienförmig auf Stahl aufgetragen werden.

Nach der Trocknung bei 60°C entstehen so kompakte Stege aus Glaspulver, die gut auf den Zellen und Metallteilen haften. Bei der Hochtemperaturbehandlung (800°C-900°C) während des Betriebes der SOFC sintert und kristallisiert das Glaslot zu einer Glaskeramik

Die Stackmontage (Assemblierung) schließt den Stackbau ab und bildet somit eine Vorbereitung für den stoffschlüssigen Fügeprozess. Dabei werden unterschiedliche Stahlteile (Gehäuse, Deckel, Endkonnektoren, Interkonnektoren) und keramische Komponenten (Zellen) im Gehäuse zum fertigen Stack gestapelt.

Da diese Teile an den geforderten Stellen sowohl gasdicht, als auch elektrisch gegeneinander isolierend sein sollen, ist das Einhalten definierter Toleranzen der Komponenten wesentlich, was an das Glaslot hohe Anforderungen stellt.

Die erfindungsgemäße Plattengestaltung lässt sich jedoch auch bei Platten für Niedertemperaturbereiche einsetzen.

Die Anwendungstemperatur der Platten in unterschiedlichen Verfahren beinhaltet Niedertemperaturbereiche (PEMFC z.B.) 60-90°C ebenso wie Mittel- und Hochtemperaturbereiche. Ab 250°C, also dann, wenn Polymere (Elastomere) nicht mehr anwendbar sind, ist das Glaslotverbund relevant.

Die Anwendung von Interkonnektorplatten kann auf theoretisch unendlich hohe Plattenzahlen erweitert werden. Bei Molten Carbonate Fuell Cells betrieben bei 650°C(MCFC) werden beispielsweise etwa 250 Zellen aufgestapelt. Die erfindungsgemäßen bipolaren Platten (Interkonnektorplatten) können bei allen Brennstoffzellentypen eingesetzt werden. Die Anzahl der aufeinander gestapelten Platten wird als Wiederholzahl (SN)) bezeichnet. Die Interkonnektorplatte ermöglicht eine elektrische Kontaktierung der Elektroden und eine Weiterleitung des elektrischen Stroms zu einer benachbarten Zelle. Sie dient zur Leitung der Elektronen in der Brennstoffzelle. Die Interkonnektorplatte vermeidet das Mischen von Gasen und wirkt somit als Trennschicht. Ferner gewährleistet sie eine mechanische Stabilität der Zelle.

Eine beispielhafte wiedergegebene erfindungsgemäße Brennstoffzelle weist folgende, in Tabelle 1 wiedergegebene Daten auf:

**Tabelle 1: Geometrische Daten zum Erfindungs- Gegenstand**

| | | | |
|---|---|---|---|
| Steg Luftein / Brenngasgaus | A1 | 15 | mm |
| Abstand Manifold / Strömungsverteiler | B1 | 20 | mm |
| Abstand Brenngasaustritt / Außenkante | C1_1 | 20 | mm |
| Abstand Lufteintritt / Außenkante | C1_2 | 20 | mm |
| Halbe Breite Brenngasaustritt | D1 | 32 | mm |
| Breite Lufteintritt | E1 | 40 | mm |
| Höhe Brenngasaustritt | F1_1 | 35 | mm |
| Höhe Lufteintritt | F1_2 | 35 | mm |
| Radien Manifolds | I1 | 15 | mm |
| Länge internes Manifold | L1 | 31 | mm |
| Halbe Länge Kanäle | L2/2 | 105 | mm |
| Dicke Stahl | G1 | 2,5 | mm |
| Dicke Glas | G2 | 0,3 | mm |
| Wiederholungseinheit des Verbundes | SN | - | |

### Bezugszeichenliste:

- A1: Steg Luftein / Brenngasgaus
- B1: Abstand Manifold / Strömungsverteiler
- C1: Abstand Brenngasaustritt / Außenkante
- C1_2: Abstand Lufteintritt / Außenkante
- D1: Halbe Breite Brenngasaustritt
- E1: Breite Lufteintritt
- F1_1: Höhe Brenngasaustritt
- F1_2: Höhe Lufteintritt
- I1: Radien Manifolds
- L1: Länge internes Manifold
- L2: Länge Kanäle
- L2/2: Halbe Länge Kanäle
- G1: Dicke Stahl
- G2: Dicke Glas
- SN: Wiederholungseinheit des Verbundes

## Patentansprüche

1. Hochtemperaturbrennstoffzellenmodul, bei dem bipolare Platten in einen Interkonnektor eingegliedert und übereinander gestapelt sind, wobei sich durch Stapelaussparungen in einem Brennstoffzellenraum Gasversorgungs-und Gasentsorgungsräume bilden und wobei die bipolaren Platten Gasverteilerstrukturen enthalten, über die eine Anode mit Brenngas und eine Kathode mit Luft versorgt werden kann,
**dadurch gekennzeichnet,**
**dass** bei einer Breite d einer der bipolaren Platten ein Steg zwischen einer Lufteintrittsöffnung und einer Brenngasaustrittsöffnung eine Breite (A1) von wenigstens 6% von d aufweist, dass eine halbe Breite (D1) wenigstens einer Brenngasaustrittsöffnung wenigstens 10% von d beträgt, dass eine Höhe (F1_1) der Brenngasaustrittsöffnung wenigstens 7% von d beträgt, und dass die Lufteintrittsöffnung, die Luftaustrittsöffnung, die Brenngaseintrittsöffnung und die Brenngasaustrittsöffnung wenigstens abschnittsweise bogenförmig ausgebildet sind.

2. Hochtemperaturbrennstoffzellenmodul nach Anspruch 1,
**dadurch gekennzeichnet,**
**dass** die bogenförmige Ausbildung durch ein Rechteck mit abgerundeten Kanten realisiert wird.

3. Hochtemperaturbrennstoffzellenmodul nach Anspruch 1,
**dadurch gekennzeichnet,**
**dass** die bogenförmige Ausbildung durch eine Ellipse realisiert wird.

4. Hochtemperaturbrennstoffzellenmodul nach Anspruch 1,
**dadurch gekennzeichnet,**
**dass** die bogenförmige Ausbildung durch einen Kreis realisiert wird.

5. Hochtemperaturbrennstoffzellenmodul nach einem der vorangegangenen Ansprüche,
**dadurch gekennzeichnet,**
**dass** der Steg zwischen der Lufteintrittsöffnung und der Brenngasaustrittsöffnung eine Breite von wenigstens 20% von d aufweist.

6. Hochtemperaturbrennstoffzellenmodul nach einem der vorangegangenen Ansprüche,
**dadurch gekennzeichnet,**
**dass** eine Länge eines internen Manifolds wenigstens 10% von d beträgt.

7. Hochtemperaturbrennstoffzellenmodul nach einem der vorangegangenen Ansprüche,
**dadurch gekennzeichnet,**
**dass** eine Länge eines internen Manifolds wenigstens 12% von d beträgt.

8. Hochtemperaturbrennstoffzellenmodul nach einem der vorangegangenen Ansprüche,
**dadurch gekennzeichnet,**
**dass** ein Abstand (B1) zwischen einem Manifold und einem Strömungsverteiler wenigstens 6% von d beträgt.

9. Hochtemperaturbrennstoffzellenmodul nach einem der vorangegangenen Ansprüche,
**dadurch gekennzeichnet,**
**dass** die halbe Breite (D1) der Brenngasaustrittsöffnung wenigstens 12% von d beträgt.

10. Hochtemperaturbrennstoffzellenmodul nach einem der vorangegangenen Ansprüche,
**dadurch gekennzeichnet,**
**dass** eine Breite (E1) einer der Lufteintrittsöffnungen wenigstens 9% von d beträgt.

11. Hochtemperaturbrennstoffzellenmodul nach Anspruch 10,
**dadurch gekennzeichnet,**
**dass** die Breite (E1) einer der Lufteintrittsöffnungen wenigstens 15% von d beträgt.

12. Hochtemperaturbrennstoffzellenmodul nach einem der vorangegangenen Ansprüche,
**dadurch gekennzeichnet,**
**dass** ein Radius (11) des Manifolds wenigstens 6% von d beträgt.

13. Hochtemperaturbrennstoffzellenmodul nach einem der vorangegangenen Ansprüche,
**dadurch gekennzeichnet,**
**dass** ein Abstand zwischen einer Brenngaseintrittsöffnung und einer Außenkante der bipolaren Platte wenigstens 8% von d beträgt.

14. Hochtemperaturbrennstoffzellenmodul nach einem der vorangegangenen Ansprüche,
**dadurch gekennzeichnet,**
**dass** ein hochlegierter ferritischer Stahl als Werkstoff für die bipolaren Platten eingesetzt wird.

15. Hochtemperaturbrennstoffzellenmodul nach einem der vorangegangen Ansprüche,
**dadurch gekennzeichnet,**
**dass** ein elektrischer Kontakt zwischen den bipolaren Platten unter Einsatz eines Metalls erfolgt, dass auf einer Oberfläche eine zweiphasige Schicht ausbildet, die aus einem Cr-Mn-Spinell auf einer Cr₂O₃-Zwischenschicht besteht.

16. Hochtemperaturbrennstoffzellenmodul nach Anspruch 12,
**dadurch gekennzeichnet,**
**dass** Metall Jülicher Stahl JS3 als Bestandteil enthält.

17. Hochtemperaturbrennstoffzellenmodul nach Anspruch 13,
**dadurch gekennzeichnet,**
**dass** der Jülicher Stahl JS3 ein wesentlicher Legierungsbestandteil des eingesetzten Metalls ist.

## Claims

1. A high-temperature fuel cell module in which bipolar plates are integrated into an interconnector and stacked one above the other, whereby gas supply and gas discharge chambers are formed by stack recesses in a fuel cell chamber and whereby the bipolar plates have gas distribution structures via which an anode can be supplied with combustible gas and a cathode can be supplied with air,
**characterized in that,**
at a width d of one of the bipolar plates, a web between an air inlet opening and a combustible gas outlet opening has a width (A1) that is at least 6% of d, **in that** half the width (D1) of at least one combustible gas outlet opening is at least 10% of d, **in that** a height (F1_1) of the combustible gas outlet opening is at least 7% of d, and **in that** the air inlet opening, the air outlet opening, the combustible gas inlet opening and the combustible gas outlet opening have an arc-shaped configuration, at least in certain sections.

2. The high-temperature fuel cell module according to claim 1,
**characterized in that**
the arc-shaped configuration is in the form of a rectangle having rounded-off edges.

3. The high-temperature fuel cell module according to claim 1,
**characterized in that**
the arc-shaped configuration is in the form of an ellipse.

4. The high-temperature fuel cell module according to claim 1,
**characterized in that**
the arc-shaped configuration is in the form of a circle.

5. The high-temperature fuel cell module according to one of the preceding claims,
**characterized in that**
the web between the air inlet opening and the combustible gas outlet opening has a width of at least 20% of d.

6. The high-temperature fuel cell module according to one of the preceding claims,
**characterized in that**
a length of an internal manifold is at least 10% of d.

7. The high-temperature fuel cell module according to one of the preceding claims,
**characterized in that**
a length of an internal manifold is at least 12% of d.

8. The high-temperature fuel cell module according to one of the preceding claims,
**characterized in that**
a distance (B1) between a manifold and a flow distributor is at least 6% of d.

9. The high-temperature fuel cell module according to one of the preceding claims,
**characterized in that**
half the width (D1) of the combustible gas outlet opening is at least 12% of d.

10. The high-temperature fuel cell module according to one of the preceding claims,
**characterized in that**
a width (E1) of one of the air inlet openings is at least 9% of d.

11. The high-temperature fuel cell module according to claim 10,
**characterized in that**
the width (E1) of one of the air inlet openings is at least 15% of d.

12. The high-temperature fuel cell module according to one of the preceding claims,
**characterized in that**
a radius (11) of the manifold is at least 6% of d.

13. The high-temperature fuel cell module according to one of the preceding claims,
**characterized in that**
a distance between a combustible gas inlet opening and an outer edge of the bipolar plate is at least 8% of d.

14. The high-temperature fuel cell module according to one of the preceding claims,
**characterized in that**
a high-alloy ferritic steel is used as the material for the bipolar plates.

15. The high-temperature fuel cell module according to one of the preceding claims,
**characterized in that**
an electric contact is established between the bipolar plates by using a metal that forms a two-phase layer on a surface consisting of a Cr-Mn spinel on a Cr₂O₃ intermediate layer.

16. The high-temperature fuel cell module according to claim 12,
**characterized in that**
the metal contains Jülich steel JS3 as a constituent.

17. The high-temperature fuel cell module according to claim 13,
**characterized in that**
the Jülich steel JS3 is an essential alloy constituent of the metal employed.

## Revendications

1. Module de pile à combustible à haute température, selon lequel des plaques bipolaires sont intégrées à un interconnecteur et sont empilées les unes sur les autres, des intervalles dans la pile formant des espaces d'alimentation en gaz et d'élimination de gaz dans un espace de pile à combustible et les plaques bipolaires contenant des structures de distribution de gaz via lesquelles une anode peut être alimentée en gaz combustible et une cathode, en air,
**caractérisé en ce que**, étant donné une largeur d de l'une des plaques bipolaires, un pont entre un orifice d'entrée d'air et un orifice de sortie de gaz combustible présente une largeur (A1) d'au moins 6 % de d, **en ce qu'**une demi-largeur (D1) d'au moins un orifice de sortie de gaz combustible correspond à au moins 10 % de d, **en ce qu'**une hauteur (F1_1) de l'orifice de sortie de gaz combustible correspond à au moins 7 % de d et **en ce que** l'orifice d'entrée d'air, l'orifice de sortie d'air, l'orifice d'entrée de gaz combustible et l'orifice de sortie de gaz combustible sont réalisés au moins en partie en forme d'arc.

2. Module de pile à combustible à haute température selon la revendication 1, **caractérisé en ce que** la configuration en forme d'arc est réalisée par un rectangle présentant des bords arrondis.

3. Module de pile à combustible à haute température selon la revendication 1, **caractérisé en ce que** la configuration en forme d'arc est réalisée par une ellipse.

4. Module de pile à combustible à haute température selon la revendication 1, **caractérisé en ce que** la configuration en forme d'arc est réalisée par un cercle.

5. Module de pile à combustible à haute température selon l'une des revendications précédentes, **caractérisé en ce que** le pont entre l'orifice d'entrée d'air et l'orifice de sortie de gaz combustible présente une largeur d'au moins 20 % de d.

6. Module de pile à combustible à haute température selon l'une des revendications précédentes, **caractérisé en ce qu'**une longueur d'un manifold interne correspond à au moins 10 % de d.

7. Module de pile à combustible à haute température selon l'une des revendications précédentes, **caractérisé en ce qu'**une longueur d'un manifold interne correspond à au moins 12 % de d.

8. Module de pile à combustible à haute température selon l'une des revendications précédentes, **caractérisé en ce qu'**une distance (B1) entre un manifold et un distributeur d'écoulement correspond à au moins 6 % de d.

9. Module de pile à combustible à haute température selon l'une des revendications précédentes, **caractérisé en ce que** la demi-largeur (D1) de l'orifice de sortie de gaz combustible correspond à au moins 12 % de d.

10. Module de pile à combustible à haute température selon l'une des revendications précédentes, **caractérisé en ce qu'**une largeur (E1) de l'un des orifices d'entrée d'air correspond à au moins 9 % de d.

11. Module de pile à combustible à haute température selon la revendication 10, **caractérisé en ce que** la largeur (E1) de l'un des orifices d'entrée d'air correspond à au moins 15 % de d.

12. Module de pile à combustible à haute température selon l'une des revendications précédentes, **caractérisé en ce qu'**un rayon (11) du manifold correspond à au moins 6 % de d.

13. Module de pile à combustible à haute température selon l'une des revendications précédentes, **caractérisé en ce qu'**une distance entre un orifice d'entrée de gaz combustible et un bord extérieur de la plaque bipolaire correspond à au moins 8 % de d.

14. Module de pile à combustible à haute température selon l'une des revendications précédentes, **caractérisé en ce qu'**un acier ferritique fortement allié est utilisé comme matériau pour les plaques bipolaires.

15. Module de pile à combustible à haute température selon l'une des revendications précédentes, **caractérisé en ce qu'**un contact électrique entre les plaques bipolaires est établi en utilisant un métal qui forme sur une surface une couche biphasique composée d'un spinelle de Cr et Mn sur une couche intermédiaire de Cr₂O₃.

16. Module de pile à combustible à haute température selon la revendication 12, **caractérisé en ce que** le métal contient en tant que composant de l'acier Jülich JS3.

17. Module de pile à combustible à haute température selon la revendication 13, **caractérisé en ce que** l'acier Jülich JS3 est un composant essentiel de l'alliage du métal utilisé.
